# EUROPEAN PATENT APPLICATION

(11) **EP 4 253 923 A1**
(43) Date of publication of application: **04.10.2023**
(21) Application number: 22382311.3
(22) Date of filing: 31.03.2022
(51) Int. Cl.: G01J 1/16, G01J 1/42

(54) **PHOTOMETER CALIBRATION METHOD WITH SIMULTANEOUS NIGHT SKY MEASUREMENTS**

(71) Applicant: Instituto de Astrofisica de Canarias, 38205 San Cristóbal de La Laguna (ES)
(72) Inventor: Serra Ricart, Miguel, 38205 San Cristóbal de La Laguna (ES); Rodríguez Alarcón, Miguel, 38205 San Cristóbal de La Laguna (ES); Lemes Perera, Samuel, 38205 San Cristóbal de La Laguna (ES)
(74) Representative: Pons

(57) **Abstract**

The calibration method consists in the comparison of simultaneous dark measurements between the photometer to be calibrated and a reference one, to obtain the Zero Point of the former. Constrains on the elevation of the Sun, Moon, clouds and distance to the galactic plane are defined to reduce variability due to spectral differences between devices and the RANSAC method is applied to eliminate extreme values. Specifically, the method comprises the steps of: defining a first reference photometer; taking two simultaneous dark measurements (SDM) at the same place by a photometer and the reference photometer; filtering the SDMs; repeating the previous steps to obtain N filtered SDMs; fitting a line to the filtered SDMs with a least squares algorithm to extract inliers; and obtaining the mean and standard deviation of the inliers.

## Description

### OBJECT OF THE INVENTION

The present invention describes a method of photometer calibration using simultaneous night sky measurements. It allows to obtain lower calibration errors than the laboratory calibration method.

### BACKGROUND OF THE INVENTION

In the field of telescopes, the problem of calibrating large groups of photometers simultaneously and within a reasonable time (in the order of days) during all nights of the year is one of the fundamental problems that is being addressed with different approaches.

Another aspect that complicates the problem is that it is common that several types of photometers are used in different telescopes, or sometimes even in the same telescope. This accentuates the calibration problem, as different dispersions can appear in the different photometers.

What is more, due to small differences in spectral response between photometers, the simultaneous measurements for each pair of them may vary depending on the observed spectrum.

### DESCRIPTION OF THE INVENTION

The present invention describes a method of photometer calibration in a telescope using simultaneous night sky measurements. It allows to obtain lower calibration errors than the laboratory calibration method with an integrating sphere.

The laboratory calibration method consists of the cross-calibration of pairs of photometers placed on an integrating sphere that provides homogeneous illumination. In this method, a nearly monochromatic light beam is fed into the entrance port of an integrating sphere, which has two output ports fitted with identical lambertian diffusers. Two photometers, a reference (can be replaced by a calibrated photodiode for absolute calibration) and the one to be calibrated are attached to these ports, in which a uniform angular radiance that completely fills the effective field-of-view of the photometers is expected.

The present method entails the comparison of simultaneous dark measurements between a photometer to be calibrated and a reference one, to obtain the zero point (ZP) of the former, understanding the ZP in a system as the magnitude of an object that produces one count per second on the detector. The zero point is used to calibrate a system to the standard magnitude system, as the flux detected from stars will vary from detector to detector.

Constrains on the elevation of the Sun, Moon, clouds and distance to the galactic plane are defined to reduce variability due to spectral differences between photometers and a least squares algorithm (RANSAC preferably) is applied to eliminate extreme values.

In order to combine all the pairs of photometers of the telescope, an average value must be defined to correct the systematic error present in the ZP of each of them. The average value is defined as the median (P50) of the difference between the simultaneous dark measurements (hereafter SDM) of photometers. The DSM condition implies that two photometers take a measurement at the same time (up to 30 seconds tolerable error) under conditions of equal illumination and with spectral distribution equivalent to that of the night sky.

Applying this correction decouples the effect of the original calibration error of the devices from the dispersion of their simultaneous measurements.

Due to small differences in spectral response between photometers, the simultaneous measurements for each pair of them may vary depending on the observed spectrum. The main sources that can change the zenith spectrum are the Sun, Moon, Galaxy and Zodiacal Light.

The key to the calibration process is to determine limits on each of these components such that a low calibration error, on the order of a hundredth, can be obtained but does not overly restrict the period available for calibration.

The general procedure is intended for calibrating a photometer which can be a TESS photometer (Telescope Encoder and Sky Sensor) or a SG photometer (Sky Glow Wireless Autonomous Sensor) and it comprises the following steps:
- defining a reference photometer,
- taking two simultaneous dark measurements (SDM) at the same place by a photometer and the reference photometer,
- filtering the SDM with the following criteria:
   ∘ Sun elevation < -15º (TESS), -10º (SG)
   ∘ Moon elevation < 10º (TESS), -20º (SG)
   ∘ Absolute galactic latitude > 30º (TESS), 10º (SG)
   ∘ Magnitude error < 0.01 mag/arcsec²,
   ∘ 14 < Magnitude < 22 mag/arcsec²
- repeating the previous steps to obtain N filtered SDM,
- fitting a line to the relationship between the filtered SDM with a least squares algorithm to extract inliners, and
- obtaining the mean and standard deviation of the magnitude differences of the inliers.

As explained before, N random SDM are taken from the photometers, until a convergence point is reached.

The present method allows mass calibration of photometers in less than seven nights at any time of the year. What is more, having established filters based on the astronomical components implies that the time available to take calibration measurements depends on the time of the year.

### DESCRIPTION OF THE DRAWINGS

To complement the description being made and in order to aid towards a better understanding of the characteristics of the invention, in accordance with a preferred example of practical embodiment thereof, a set of drawings is attached as an integral part of said description wherein, with illustrative and non-limiting character, the following has been represented:
Figure 1.- Shows a table with the TESS photometers used in the study.
Figures 2A-2B.- Show a distribution of the differences of P50 uncorrected (darker grey) between TESS (2A) and SG (2B) photometer pairs, and the correction (lighter grey) by the P50 calculated under absolute darkness conditions.
Figures 3A-3D.- Show the uncertainty in obtaining the ZP using the calibration method with SDM as a function of Sun.
Figure 4.- Shows a table with the filters applied for the calibration.
Figures 5A-5D.- Show ZP and uncertainty obtained using the calibration method as a function of the number of available measurements, randomly selected.
Figures 6A-6B.- Show the maximum number of calibration measurements that can be taken with TESS (6A) and SG (6B) depending on the time of year.

### PREFERRED EMBODIMENT OF THE INVENTION

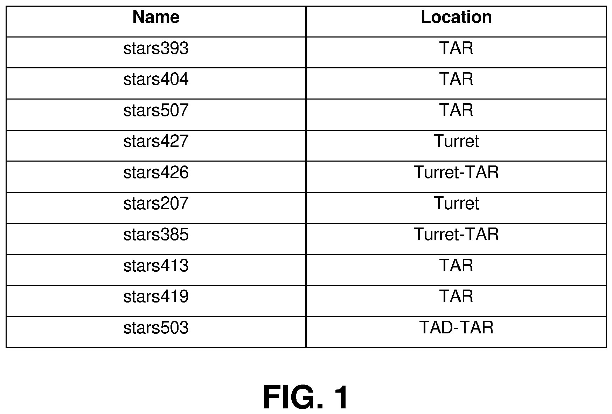

It is described below, with the help of figure 1-6, a preferred embodiment of the photometer calibration method with simultaneous night sky measurements, object of the present invention.

Two kinds of photometer have been used to describe an embodiment of the present procedure: TESS (Telescope Encoder and Sky Sensor) and SG-WAS (Sky Glow Wireless Autonomous Sensor) photometers.

TESS photometers are a type of inexpensive but reliable photometers that can be used to measure night sky brightness. Their bandpass is extended to the red with respect of that of the Sky Quality Meter (SQM). TESS photometers connect to a router via WIFI and automatically send the brightness values to a data repository using Internet of Things protocols. The device includes an infrared sensor to estimate the cloud coverage. It is designed for fixed stations to monitor the evolution of the sky brightness. The photometer could also be used in local mode connected to a computer or tablet to gather data from a moving vehicle.

SG-WAS are low-cost photometers for measuring Night Sky Brightness (NSB). SG-WAS are based on the TSL237 sensor, like the Unihedron Sky Quality Meter (SQM) or the STARS4ALL Telescope Encoder and Sky Sensor (TESS), with wireless communication (LoRa, WiFi, or LTE-M) and solar-powered rechargeable batteries.

Particularly, in the present embodiment, measurements from ten TESS and twelve SG-WAS photometers located at different points of the Teide Observatory, taken until May 27, 2021, have been used. The selected SG-WAS are shown in the table of Figure 1 and the SG photometers are: 1*82, 1*83, 1*84, 1*85, 1*86, 1*87, 1*88, 1*89, 1*90, 1*92, 1*94, 1*97 (all of them located in a remote open telescope)

In order to combine all the pairs of photometers in a telescope, an average value must be defined to correct the systematic error present in the zeropoint (ZP) of each of them. This is defined as the median (P50) of the difference between the simultaneous dark measurements (SDM) of photometers.

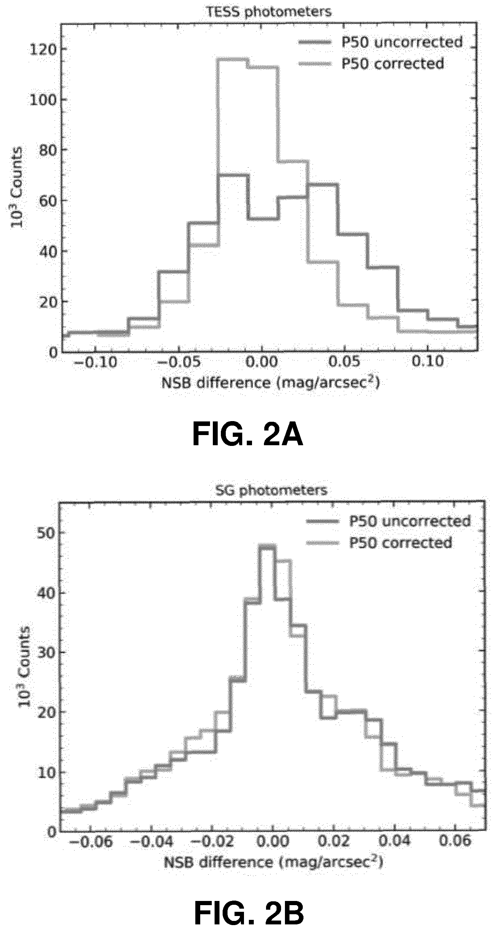

The histogram of the differences of zenithal SDM (darker grey) between TESS (upper image) and SG (lower image) photometer pairs of TESS and SG photometers in SDMs is shown in Figures 2A-2B. To avoid differences in the ZP of the photometers due to the original systematic calibration error, these have been corrected (lighter grey) by the P50 calculated under absolute darkness conditions. Note the effect of correcting the SDMs for their P50 on the symmetry and width of the distribution.

Applying this correction decouples the effect of the original calibration error of the photometers from the dispersion of their simultaneous measurements. Despite having been calibrated earlier by the Laboratory for Scientific Advanced Instrumentation (LICA) at the Universidad Complutense de Madrid (UCM), TESS photometers appear to have a higher original dispersion than the SG, which in principle has not been previously calibrated.

Due to small differences in spectral response between photometers, the simultaneous measurements for each pair of photometers may vary depending on the observed spectrum. The main sources that can change the zenith spectrum are the Sun, Moon, Galaxy and Zodiacal Light.

The key to the calibration process is to determine limits on each of these components such that a low calibration error, on the order of a hundredth, can be obtained but does not overly restrict the period available for calibration. For that purpose, only points taken in absolute darkness have been selected, defined as:
∘ Sun elevation < -18º;
∘ Moon elevation < -5º;
∘ Absolute galactic latitude > 40º;
∘ Absolute ecliptic latitude > 25º.

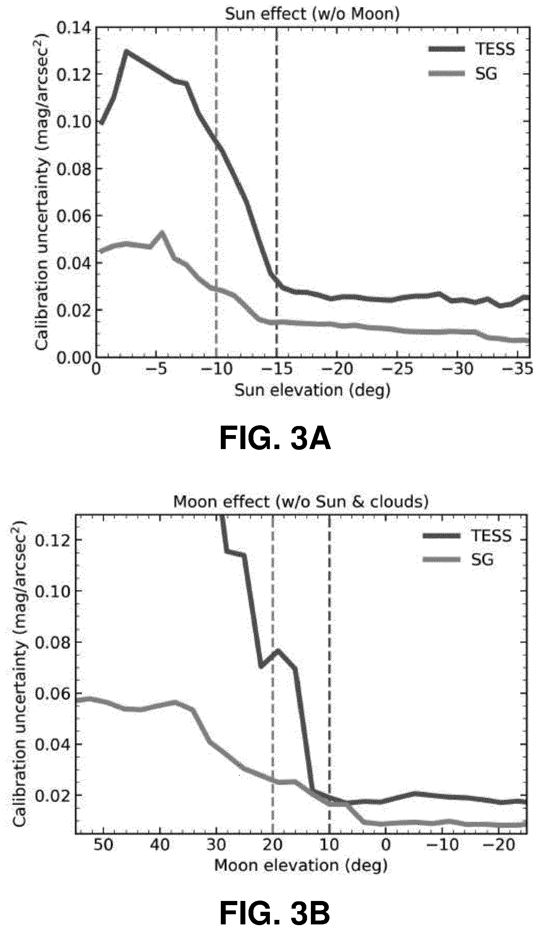

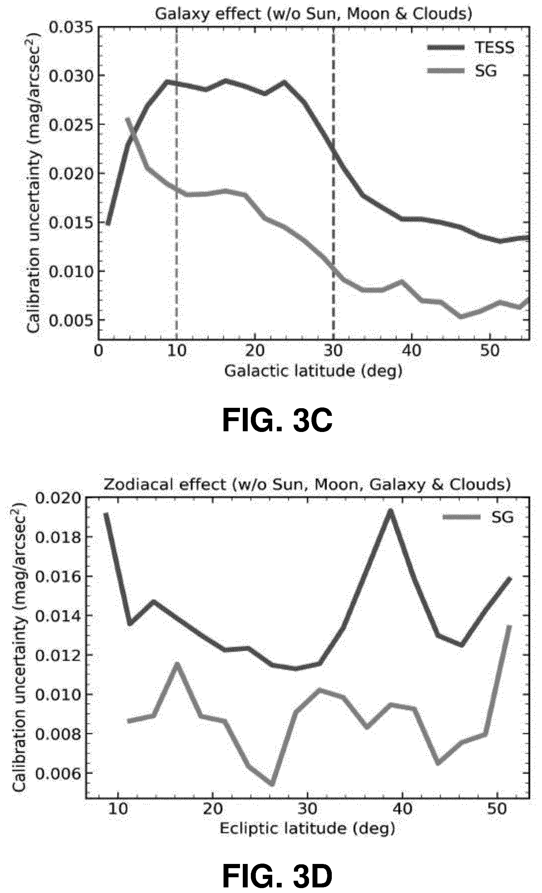

In this analysis, TESS and SG have been considered separately, after verifying that the error obtained by combining them is at least 0.05 mag/arcsec². The uncertainties in obtaining the ZP as a function of Sun and Moon height and absolute galactic and ecliptic latitude are shown in Figures 3A-3D.

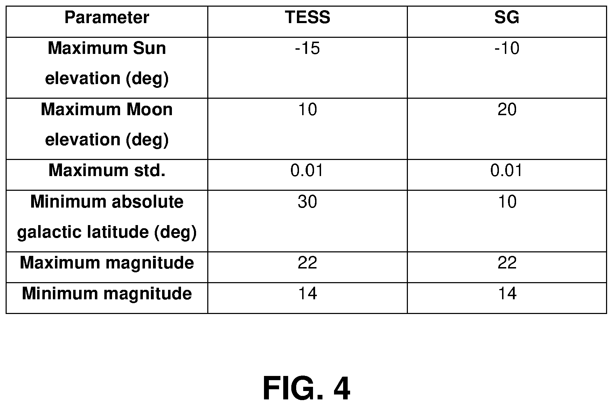

The vertical lines shown in Figures 3A-3D indicate the filters that have been defined, considering a limiting dispersion in the SDM as 0.02 mag/arcsec², are summarized in Figure 4.

Note that no filter has been introduced for Zodiacal Light as it is considered, according to Figure 3D, that it does not contribute significantly to the calibration uncertainty.

Before obtaining the distribution difference and calculating the ZP and calibration error, a least square algorithm, preferably RANSAC (Random Sample Consensus) algorithm, has to be used to reject outliers that may not have been filtered out correctly.

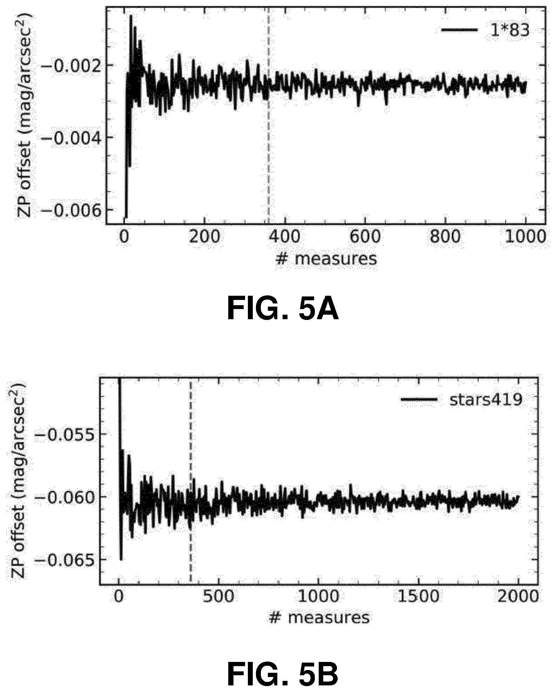

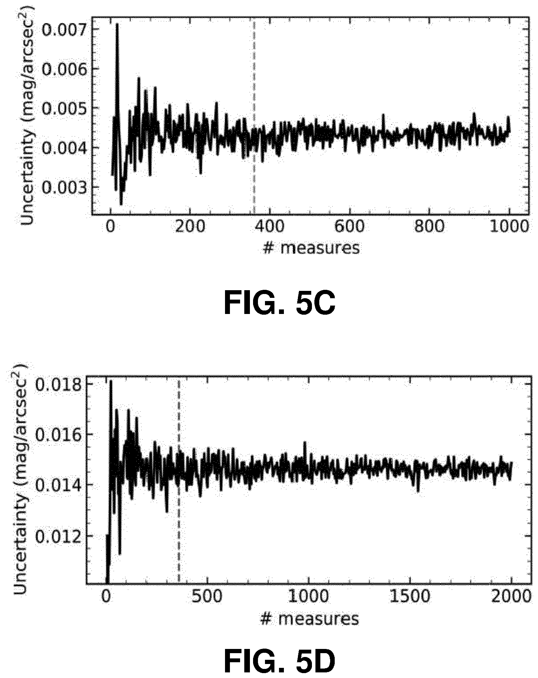

The following table (table 1) shows the results of the pairwise comparisons of TESS and SG photometers applying what has been described so far, and Figures 5A-5D show the obtained ZP offset distributions and their uncertainty.

**Table 1: ZP and calibration error between TESS and SG pairs, indicating N the number of available measurements.**

| **x** | **y** | **ZP** | **ZP_err** | **N** |
|---|---|---|---|---|
| **stars385** | **stars507** | 0,023 | 0,012 | 2995 |
| **stars385** | **stars393** | -0,022 | 0,01 | 1799 |
| **stars385** | **stars404** | 0,065 | 0,013 | 1797 |
| **stars385** | **stars413** | 0,079 | 0,012 | 3002 |
| **stars385** | **stars419** | 0,06 | 0,015 | 3004 |
| **stars385** | **stars426** | 0,036 | 0,018 | 17418 |
| **stars385** | **stars427** | 0,036 | 0,015 | 14433 |
| **stars385** | **stars503** | 0,015 | 0,012 | 3005 |
| **stars385** | **stars207** | 0,017 | 0,012 | 13654 |
| **stars507** | **stars393** | -0,045 | 0,012 | 4586 |
| **stars507** | **stars404** | 0,037 | 0,012 | 4673 |
| **stars507** | **stars413** | 0,056 | 0,011 | 2958 |
| **stars507** | **stars419** | 0,038 | 0,013 | 2975 |
| **stars507** | **stars426** | 0,021 | 0,015 | 2885 |
| **stars507** | **stars503** | -0,008 | 0,013 | 2945 |
| **stars393** | **stars404** | 0,082 | 0,014 | 4589 |
| **stars393** | **stars413** | 0,104 | 0,012 | 1776 |
| **stars393** | **stars419** | 0,086 | 0,013 | 1776 |
| **stars393** | **stars426** | 0,07 | 0,016 | 1776 |
| **stars393** | **stars503** | 0,041 | 0,013 | 1776 |
| **stars404** | **stars413** | 0,016 | 0,009 | 1807 |
| **stars404** | **stars419** | -0,002 | 0,01 | 1808 |
| **stars404** | **stars426** | -0,019 | 0,011 | 1809 |
| **stars404** | **stars503** | -0,047 | 0,013 | 1809 |
| **stars413** | **stars419** | -0,018 | 0,011 | 2966 |
| **stars413** | **stars426** | -0,035 | 0,015 | 2964 |
| **stars413** | **stars503** | -0,064 | 0,009 | 2968 |
| **stars419** | **stars426** | -0,016 | 0,011 | 2987 |
| **stars419** | **stars503** | -0,046 | 0,012 | 2987 |
| **stars426** | **stars427** | 0,002 | 0,016 | 14454 |
| **stars426** | **stars503** | -0,029 | 0,016 | 3022 |
| **stars426** | **stars207** | -0,017 | 0,017 | 13468 |
| **stars427** | **stars207** | -0,019 | 0,016 | 13661 |

| **x** | **y** | **ZP** | **ZP_err** | **N** |
|---|---|---|---|---|
| **1*82** | **1*83** | 0,003 | 0,004 | 1283 |
| **1*82** | **1*84** | 0,009 | 0,005 | 1127 |
| **1*82** | **1*85** | 0,019 | 0,006 | 1341 |
| **1*82** | **1*86** | 0,004 | 0,009 | 1420 |
| **1*82** | **1*87** | 0,054 | 0,013 | 1268 |
| **1*82** | **1*88** | 0,023 | 0,004 | 1149 |
| **1*82** | **1*89** | 0,035 | 0,01 | 1130 |
| **1*82** | **1*90** | 0,037 | 0,009 | 1166 |
| **1*82** | **1*92** | 0,008 | 0,013 | 1181 |
| **1*82** | **1*94** | 0,007 | 0,011 | 1128 |
| **1*82** | **1*97** | 0,009 | 0,007 | 1391 |
| **1*83** | **1*84** | 0,007 | 0,005 | 1339 |
| **1*83** | **1*85** | 0,016 | 0,006 | 1373 |
| **1*83** | **1*86** | 0,001 | 0,007 | 1347 |
| **1*83** | **1*87** | 0,052 | 0,012 | 1103 |
| **1*83** | **1*88** | 0,02 | 0,007 | 978 |
| **1*83** | **1*89** | 0,032 | 0,008 | 1044 |
| **1*83** | **1*90** | 0,036 | 0,006 | 1146 |
| **1*83** | **1*92** | 0,005 | 0,011 | 1325 |
| **1*83** | **1*94** | 0,004 | 0,011 | 1267 |
| **1*83** | **1*97** | 0,006 | 0,006 | 1302 |
| **1*84** | **1*85** | 0,01 | 0,007 | 1439 |
| **1*84** | **1*86** | -0,005 | 0,006 | 1320 |
| **1*84** | **1*87** | 0,045 | 0,01 | 1024 |
| **1*84** | **1*88** | 0,014 | 0,007 | 1021 |
| **1*84** | **1*89** | 0,026 | 0,008 | 1066 |
| **1*84** | **1*90** | 0,028 | 0,006 | 1471 |
| **1*84** | **1*92** | -0,001 | 0,01 | 1460 |
| **1*84** | **1*94** | -0,002 | 0,009 | 1308 |
| **1*84** | **1*97** | -0,001 | 0,005 | 1225 |
| **1*85** | **1*86** | -0,015 | 0,011 | 1321 |
| **1*85** | **1*87** | 0,034 | 0,017 | 1184 |
| **1*85** | **1*88** | 0,004 | 0,006 | 1135 |

| **x** | **y** | **ZP** | **ZP_err** | **N** |
|---|---|---|---|---|
| **1*85** | **1*89** | 0,015 | 0,012 | 1201 |
| **1*85** | **1*90** | 0,018 | 0,01 | 1494 |
| **1*85** | **1*92** | -0,011 | 0,014 | 1516 |
| **1*85** | **1*94** | -0,012 | 0,014 | 1266 |
| **1*85** | **1*97** | -0,01 | 0,008 | 1317 |
| **1*86** | **1*87** | 0,05 | 0,007 | 1069 |
| **1*86** | **1*88** | 0,02 | 0,011 | 1003 |
| **1*86** | **1*89** | 0,031 | 0,006 | 1191 |
| **1*86** | **1*90** | 0,033 | 0,008 | 1496 |
| **1*86** | **1*92** | 0,004 | 0,006 | 1493 |
| **1*86** | **1*94** | 0,003 | 0,007 | 1301 |
| **1*86** | **1*97** | 0,005 | 0,004 | 1426 |
| **1*87** | **1*88** | -0,03 | 0,015 | 1110 |
| **1*87** | **1*89** | -0,019 | 0,007 | 1073 |
| **1*87** | **1*90** | -0,016 | 0,01 | 1242 |
| **1*87** | **1*92** | -0,046 | 0,007 | 1260 |
| **1*87** | **1*94** | -0,047 | 0,005 | 1088 |
| **1*87** | **1*97** | -0,045 | 0,009 | 1157 |
| **1*88** | **1*89** | 0,012 | 0,013 | 1106 |
| **1*88** | **1*90** | 0,015 | 0,01 | 1038 |
| **1*88** | **1*92** | -0,016 | 0,014 | 1137 |
| **1*88** | **1*94** | -0,017 | 0,014 | 881 |
| **1*88** | **1*97** | -0,016 | 0,008 | 1104 |
| **1*89** | **1*90** | 0,002 | 0,011 | 1185 |
| **1*89** | **1*92** | -0,027 | 0,009 | 1120 |
| **1*89** | **1*94** | -0,028 | 0,009 | 1030 |
| **1*89** | **1*97** | -0,026 | 0,008 | 1086 |
| **1*90** | **1*92** | -0,029 | 0,011 | 1283 |
| **1*90** | **1*94** | -0,03 | 0,008 | 1264 |
| **1*90** | **1*97** | -0,028 | 0,009 | 1241 |
| **1*92** | **1*94** | -0,001 | 0,007 | 1095 |
| **1*92** | **1*97** | 0 | 0,008 | 1143 |
| **1*94** | **1*97** | 0,001 | 0,009 | 1196 |

Entering now in detail into the steps of the procedure, firstly a TESS and SG reference photometer ("mother") must be defined. It is also recommended to designate a second "mother" SG in case something happens with the original one.

Although the method is independent of the photometer chosen as a reference, since the difference in ZP between each pair of photometers is known, it is proposed to use:
- "Mother" TESS: stars385
- "Mother" SG: 1*82
- "Mother 2" SG: 1*83

Additionally, it is important to clarify that two measurements are simultaneous if they are taken at the same place (Turret/TAR, relative distances less than 50 cm) and their time difference is below 30s.

In view of the above, the procedure of the present invention for calibrating a photometer comprises the following steps:
- defining a reference photometer,
- taking two simultaneous dark measurements (SDM) at the same place by a photometer and the reference photometer,
- filtering the SDM with the following criteria:
   ∘ Sun elevation < -15º (TESS), -10º (SG)
   ∘ Moon elevation < 10º (TESS), -20º (SG)
   ∘ Absolute galactic latitude > 30º (TESS), 10º (SG)
   ∘ Magnitude error < 0.01 mag/arcsec²,
   ∘ 14 < Magnitude < 22 mag/arcsec²
- repeating the previous steps to obtain N filtered SDM,
- fitting a line to the filtered SDM with a least squares algorithm and extracting inliers, and
- obtaining the mean (P50) and standard deviation of the inliers.

Figures 5A-5D show the ZP value and its uncertainty for a TESS and SG photometer calibrated against each of the "mothers". It is considered that after 360 measurements (6h for TESS, 30h for SG), the calibration value and its uncertainty will not change significantly, so it is ready to be deployed. The results have been found to be similar for other photometer combinations.

The calibration error achieved is shown to be less than 0.02 mag/arcsec², a factor of two less than that achieved with the integrating sphere method in the laboratory. The method allows mass calibration of photometers in less than 7 nights (6h for TESS, 30h for SG) at any time of the year. The results are similar for other photometer combinations.

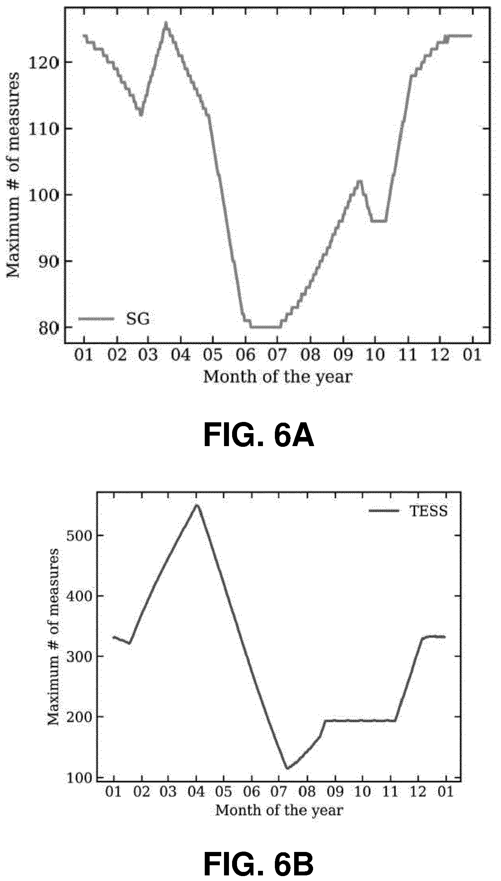

Having established filters based on the astronomical components implies that the time available to take calibration measurements depends on the time of the year. Hence, Figures 6A-6B show the maximum number of measurements that can be taken from the Teide Observatory depending on the day of the year. It is important to emphasize that this is the maximum, since the presence of the Moon or clouds will decrease the available time.

## Claims

1. A photometer calibration method with simultaneous night sky measurements, that comprises the steps of:
- defining a first reference photometer,
- taking two simultaneous dark measurements (SDM) at the same place by a photometer selected between a TESS photometer (Telescope Encoder and Sky Sensor) and a SG photometer (Sky Glow Wireless Autonomous Sensor), and the reference photometer,
- filtering the SDMs with the following criteria:
∘ Sun elevation < -15º (TESS), -10º (SG)
∘ Moon elevation < 10º (TESS), -20º (SG)
∘ Absolute galactic latitude > 30º (TESS), 10º (SG)
∘ Magnitude error < 0.01 mag/arcsec²,
∘ 14 < Magnitude < 22 mag/arcsec²
- repeating the previous steps to obtain N filtered SDMs,
- fitting a line to the filtered SDMs with a least squares algorithm to extract inliers,
- obtaining the mean and standard deviation of the inliers.

2. The method of claim 1, wherein the first reference photometer is a TESS or a SG photometer.

3. The method of claim 1, wherein it additionally comprises the step of defining a second reference photometer, in case of failure of the first reference photometer.

4. The method of claim 1, wherein the first reference photometer is selected between stars385 (TESS) and 1*82 (SG).

5. The method of claim 3, wherein the second reference photometer is 1*83 (SG).

6. The method of claim 1, wherein the least squares algorithm is a RANSAC (Random Sample Consensus) algorithm.
